# EUROPÄISCHE PATENTSCHRIFT

(11) **EP 4 198 309 B1**
(45) Veröffentlichungstag und Bekanntmachung des Hinweises auf die Patenterteilung: **02.07.2025**
(21) Anmeldenummer: 22209993.9
(22) Anmeldetag: 28.11.2022
(51) Int. Cl.: F04C 2/08, F04C 2/16

(54) **SCHRAUBENSPINDELPUMPE**
SCREW SPINDLE PUMP
POMPE À VIS

(30) Priorität: 14.12.2021 DE 102021133112
(43) Veröffentlichungstag der Anmeldung: 21.06.2023
(73) Patentinhaber: Leistritz Pumpen GmbH, 90459 Nürnberg (DE)
(72) Erfinder: METZ, Herr Jürgen, 90537 Feucht (DE); Popp, Florian, 90443 Nürnberg (DE); LISSEK, Kristin, 90763 Fürth (DE)
(74) Vertreter: Lindner Blaumeier Patent- und Rechtsanwälte

(56) Entgegenhaltungen:
- EP-A1- 0 405 160
- WO-A1-2019/072895
- DE-A1- 102005 025 816
- DE-A1- 102018 130 472
- DE-B3- 102019 128 602

## Beschreibung

Die Erfindung betrifft eine Schraubenspindelpumpe, mit einem Spindelgehäuse, in dem eine Antriebsspindel und wenigstens eine mit dieser kämmenden Laufspindel in Spindelbohrungen aufgenommen sind, und mit einem das Spindelgehäuse einhausenden Außengehäuse, an dem ein axialer Einlassanschluss und ein radialer Auslassanschluss vorgesehen sind.

Eine solche Schraubenspindelpumpe dient zum Fördern eines Fluids und kommt in unterschiedlichsten Bereichen zum Einsatz. Exemplarisch ist die Förderung eines Kraftstoffes oder eines sonstigen Betriebs- oder Versorgungsfluids, beispielsweise eines Kühlmittels oder Reinigungsmittels, eines Kraftfahrzeugs zu nennen. Auch in anderen Land- oder Luftfahrzeugen wie z.B. Flugzeugen oder Drohnen können solche Schraubenspindelpumpen eingesetzt werden, wobei die Einsatzmöglichkeiten hierauf nicht beschränkt sind. Eine solche Schraubenspindelpumpe weist ein Spindelgehäuse, das auch als Innengehäuse bezeichnet werden kann, auf, in dem wenigstens zwei Spindeln, nämlich eine Antriebsspindel und eine Laufspindel, in jeweiligen Spindelbohrungen, die einander jedoch schneiden, aufgenommen sind. Die Antriebs- und die Laufspindel weisen jeweils ein Spindelprofil auf, wobei die beiden Spindelprofile miteinander kämmen. Die Antriebsspindel ist mit einem Antriebsmotor verbunden und kann aktiv gedreht werden, was auch zu einer Rotation der kämmenden Laufspindel führt. Durch die Spindelrotation wird kontinuierlich ein Fördervolumen in Richtung der Spindellängsachse verschoben, in dem das Fluid gefördert wird. Das Spindelgehäuse ist in einem Außengehäuse aufgenommen, das beispielsweise topfartig sein kann und an einer Seite über eine axiale Wand abgeschlossen sein kann, während an der anderen Seite beispielsweise der Antriebsmotor angeflanscht wird. Denkbar ist es aber auch, dass das Außengehäuse mehrteilig ist und ein zylindrisches Basisteil aufweist, das an der einen Seite über einen Deckel abgeschlossen ist, während an der anderen Seite wiederum der Antriebsmotor angeflanscht ist. Das Außengehäuse weist einen axialen Einlassanschluss, also einen entsprechenden Anschlussstutzen auf, an den eine Zuleitung angeschlossen werden kann, worüber die Saugseite definiert wird. Es weist ferner einen radialen Auslassanschluss auf, also einen entsprechenden Auslassstutzen, über den die Druckseite definiert wird. Dort tritt das geförderte Fluid mit dem jeweiligen, von der Pumpe erzeugbaren Druck aus. Eine derartige Pumpe ist beispielsweise in DE 10 2018 131 587 A1, DE 10 2018 130 472 A1 und DE 10 2005 025 816 A1 beschrieben.

Bei der bekannten Pumpe ist ein außermittig am Außengehäuse vorgesehener axialer Einlassanschluss vorgesehen, über den der Zulauf erfolgt. Das Fluid strömt sodann zunächst seitlich in Richtung zu einer axialen Einlassöffnung des Spindelgehäuses, wird durch dieses gefördert und verlässt das Spindelgehäuse an einer radialen Gehäusebohrung, von wo aus es über einen schmalen Verbindungsraum zwischen dem Spindelgehäuse und dem Außengehäuse zum radialen Auslassanschluss strömt. Im Bereich dieser radialen Auslassbohrung des Spindelgehäuses und des schmalen Verbindungsraums, also der Druckseite, liegt das geförderte Fluid mit entsprechend hohem Pumpendruck vor, sodass lokal ein hoher Druck auf dem Spindelgehäuse respektive in dem Zwischengehäusebereich, in dem der schmale Verbindungsraum vorgesehen ist, lastet.

Der Erfindung liegt das Problem zugrunde, eine demgegenüber verbesserte Schraubenspindelpumpe anzugeben.

Zur Lösung dieses Problems ist erfindungsgemäß eine Schraubenspindelpumpe wie einleitend beschrieben vorgesehen, bei der das Spindelgehäuse einen axialen Fluidauslass für das über die Antriebs- und die Laufspindel durch das Spindelgehäuse geförderte Fluid aufweist, der mit einer zwischen dem Spindelgehäuse und dem Außengehäuse ausgebildeten, sich um 360° erstreckenden Fluidkammer kommuniziert, die wiederum mit dem radialen Auslass kommuniziert.

Bei der erfindungsgemäßen Schraubenspindelpumpe ist mit besonderem Vorteil eine radiale Fluidkammer zwischen dem Spindelgehäuse und dem Außengehäuse vorgesehen, die um 360° um das Spindelgehäuse läuft, dieses also als Ringkammer umgibt. Diese ringförmige Fluidkammer liegt an der Druckseite, ist also eine Druckkammer, da ihr das aus dem Spindelgehäuse austretende, unter Druck stehende Fluid zugeführt wird. Dieses Fluid tritt aus dem Spindelgehäuse axial aus, das heißt, dass eine entsprechend große, axiale Fluidauslassöffnung am Spindelgehäuse vorgesehen ist, sodass das axial längs des Spindelpakets geförderte Fluid problemlos axial austreten kann. Irgendwelche Radialbohrungen oder ähnliche Konfigurationen sind spindelgehäuseseitig nicht vorzusehen. Der axiale Fluidauslass des Spindelgehäuses kommuniziert mit der radialen Fluid- oder Druckkammer, das heißt, dass das unter Druck stehende Fluid in geeigneter Weise umgelenkt und der radialen Fluidkammer zugeführt wird.

Da wie beschrieben diese radiale Fluid- oder Druckkammer das Innengehäuse vollständig, also um 360° umlaufend umgreift, liegt mit besonderem Vorteil um das Innengehäuse allseitig der entsprechende Pumpendruck an, das heißt, dass letztlich nahezu symmetrische Druckverhältnisse am Spindelgehäuse gegeben sind respektive auf diesem lasten. Hierdurch werden einerseits lokale Drucküberhöhungen, wie sie aus einer unsymmetrischen Druckverteilung, wie aus dem Stand der Technik bekannt, resultieren, vermieden. Zum anderen werden, resultierend aus dem sich auch im Spindelgehäuse aufbauenden Fluiddruck ergebende, wenngleich geringe Deformationen des Spindelgehäuses vermieden, da das Spindelgehäuse wie beschrieben radial außen mit dem in der Fluidkammer herrschenden Fluiddruck belastet und daher stabilisiert ist. Das heißt, dass erfindungsgemäß mit besonderem Vorteil ein Fluidmantel realisiert wird, der einen entsprechenden Radialdruck ausbildet, der das Innengehäuse stabilisiert. Dies ist insbesondere dann von Vorteil, wenn das Spindelgehäuse aus einem etwas weicheren Material, beispielsweise einem Kunststoff, gefertigt ist, was bei kleineren Schraubenspindelpumpen durchaus der Fall sein kann, die aber gleichwohl entsprechend hohe Pumpendrucke erzeugen können.

Die erfindungsgemäß vorgesehene Fluidkammer erstreckt sich wie beschrieben einerseits um 360° um das Spindelgehäuse. Andererseits sollte sie das Spindelgehäuse über wenigstens einen Teil seiner axialen Länge umgreifen. Die Fluidkammer sollte sich dabei um wenigstens die halbe Länge der Spindelbohrung respektive des Spindelgehäuses erstrecken, gegebenenfalls auch länger, beispielsweise über ca. 2/3 der Länge der Spindelbohrungen respektive des Spindelgehäuses. Denkbar ist es auch, dass sich die Fluidkammer über die gesamte Länge der Spindelbohrungen bzw. des Spindelgehäuses erstreckt. Aufgrund des axialen Austritts des Fluids aus dem Spindelgehäuse, was unter anderem auch zu einer Reduzierung etwaiger Strömungsgeräusche führt und auch daher vorteilhaft ist, und der erforderlichen Umlenkung in Richtung der Fluidkammer beginnt die Fluidkammer letztlich am druckseitigen Ende des Spindelgehäuses und erstreckt sich dann axial gesehen zum saugseitigen Ende, wobei sich die Fluidkammer über wenigstens die halbe Länge, bevorzugt auch länger, des Spindelgehäuses erstreckt.

Das Spindelgehäuse ist im Außengehäuse entsprechend zu lagern, wie natürlich auch die Fluidkammer axial gesehen entsprechend abgedichtet werden muss. Hierzu sind unterschiedliche Ausgestaltungsmöglichkeiten denkbar. Gemäß einer ersten Alternative kann die Fluidkammer über zwei Radialflansche axial begrenzt sein, wobei der eine Radialflansch mehrere axiale Durchbrechungen aufweist, über die die Fluidkammer mit dem Fluidauslass des Spindelgehäuses verbunden ist. Über diese Radialflansche ist das Spindelgehäuse im Außengehäuse aufgenommen und radial abgestützt. Der druckseitig vorgesehene Radialflansch weist entsprechende Durchbrechungen auf, die es ermöglichen, dass das aus dem Spindelgehäuse axial ausströmende Fluid nach seiner Umlenkung axial quasi zurück in die Fluidkammer strömen kann. Eine Abdichtung an dieser Seite ist natürlich nicht erforderlich. Der andere, quasi saugseitig vorgesehene Radialflansch hingegen dient der Abdichtung, wozu in diesem Bereich ein oder mehrere geeignete Dichtmittel vorgesehen sind, über die das Spindelgehäuse zum Außengehäuse hin abgedichtet ist, sodass auch die Fluidkammer an diesem saugseitigen Ende abgedichtet ist.

Alternativ zur Ausbildung zweier Radialflansche ist es auch denkbar, die Fluidkammer über einen Radialflansch einerseits, der mehrere axiale Durchbrechungen aufweist, über die die Fluidkammer mit dem Fluidauslass des Spindelgehäuses verbunden ist, und andererseits über ein Deckelbauteil axial zu begrenzen. Hier kommt nur ein druckseitig vorgesehener Radialflansch zum Einsatz, der, wie auch bei der vorstehend beschriebenen Ausführungsform, axiale Durchbrechungen aufweist, um den Rückstrom des geförderten, unter Druck stehenden Fluids in die Fluidkammer zu ermöglichen. Die andere Seite der Fluidkammer ist über ein auf das zylindrische Basisteil des Außengehäuses aufgesetztes Deckelbauteil verschlossen respektive begrenzt. Während also bei der ersten Variante der saugseitige Radialflansch die Kammerbegrenzung erwirkt, wird bei der zweiten Variante die axiale Kammerbegrenzung über das Deckelbauteil realisiert.

Wie beschrieben, ist das axial aus dem Spindelgehäuse ausströmende Fluid umzulenken und nach radial außen in die Fluidkammer zurückzuführen. Der Fluidauslass ist letztlich über die axial offene Seite des Spindelgehäuses realisiert, das bevorzugt mittig respektive zentrisch im Außengehäuse aufgenommen ist. Um auf einfache Weise die Umlenkung und Rückströmung zu realisieren, sieht eine zweckmäßige Weiterbildung vor, ein auf das Außengehäuse aufgesetztes Zwischenbauteil anzuordnen, das zum Anbinden eines Antriebsmotors ausgebildet ist, wobei an dem Zwischenbauteil eine oder mehrere, das vom Fluidauslass des Spindelgehäuses kommende Fluid zur Fluidkammer umlenkende Umlenkkavitäten ausgebildet sind. Dieses Zwischenbauteil, das auch als Adapter oder Adapterflansch angesprochen werden kann, wird einerseits axial auf das Außengehäuse aufgesetzt und daran fixiert. Andererseits bildet es auch die Montageschnittstelle für den axial auf das Zwischenbauteil aufgesetzten Antriebsmotor, der mit seiner Antriebswelle durch das Zwischenbauteil zu einer geeigneten Kupplung, über die die Antriebswelle mit der Antriebsspindel des Spindelpakets gekoppelt ist, läuft. An diesem Zwischenbauteil ist erfindungsgemäß eine oder sind mehrere Umlenkkavitäten vorgesehen, also eine oder mehrere Ausnehmungen oder Vertiefungen oder Räume, in die das axial aus dem Spindelgehäuse strömende Fluid eintritt und die sich quasi radial nach außen erstrecken und wiederum mit der Fluidkammer kommunizieren, beispielsweise über die mehreren an dem druckseitigen Radialflansch des Spindelgehäuses vorgesehenen Durchbrechungen. Über diese eine oder die mehreren Umlenkkavitäten ist es möglich, das axial austretende Fluid quasi um den gesamten Umfang radial nach außen und axial wieder zurück in die Fluidkammer umzulenken, sodass der Kammerzufluss nicht nur lokal, sondern letztlich um den gesamten Kammerumfang erfolgt.

Dabei kann das Zwischenbauteil gegenüber dem Antriebsmotor respektive der durch das Zwischenbauteil laufenden Antriebswelle abgedichtet sein, was über einen Wellendichtring möglich ist, sodass kein Fluidfluss in den Antriebsmotor zu dessen Kühlung erfolgt. In diesem Fall wäre der Antriebsmotor ein Trockenläufer. Ist keine Abdichtung, also kein Wellendichtring vorgesehen, so kann ein geringer Anteil des Fluids in den Antriebsmotor strömen, dort zirkulieren und wieder zurückströmen, sodass hierüber auch gleichzeitig eine Motorkühlung möglich ist. In diesem Fall wäre der Antriebsmotor ein Nassläufer.

Die Zwischenschaltung eines solchen Zwischenbauteils ist aber nicht zwingend erforderlich. Denn alternativ besteht auch die Möglichkeit, an einem Gehäuse eines auf das Außengehäuse aufzusetzenden Antriebsmotors eine oder mehrere, das vom Fluidauslass des Spindelgehäuses kommende Fluid zur Fluidkammer umlenkende Umlenkkavitäten vorzusehen. In diesem Fall wird das Motorgehäuse direkt auf das Außengehäuse aufgesetzt und damit verbunden, sodass das aus dem Spindelgehäuse austretende Fluid direkt gegen das Motorgehäuse strömt, an dem die eine oder die mehreren Umlenkkavitäten ausgebildet sind. Auch hier besteht wiederum die Möglichkeit, den Antriebsmotor als Trockenläufer auszuführen, wobei in diesem Fall die aus dem Motorgehäuse geführte Antriebswelle dortseits über einen Wellendichtring abgedichtet ist. Bei einer Nassläuferausführung wäre dort kein Wellendichtring vorgesehen, sodass ein gewisser Anteil an Fluid zu Kühlungszwecken in den Antriebsmotor strömen kann.

Bevorzugt wird eine Umlenkkavität in Form einer ringförmigen Nut oder topfartigen Vertiefung vorgesehen, die bevorzugt im Bereich des Nut- oder Vertiefungsgrunds rundlich ausgeführt ist. Das heißt, das Zwischenbauteil oder die Stirnwand des Motorgehäuses ist mit einer entsprechenden, ringförmigen und um 360° umlaufenden Ringnut oder konkaven respektive kalottenförmigen Vertiefung ausgeführt, die eine allseitige Fluidumlenkung ermöglicht. Hierüber ist auf einfache Weise ein symmetrischer Fluidfluss in die Fluidkammer sichergestellt. Natürlich kann die Nut auch über sich axial und radial erstreckende Stege in einzelne Nutabschnitte unterteilt sein, wenn solche Stege z.B. zu Stabilisierungszwecken vorzusehen sind.

Die Fluidkammer selbst ist, wie bereits beschrieben, über ein oder mehrere Dichtelemente zum Außengehäuse hin abgedichtet. Dieses oder diese Dichtelemente können je nach Gehäuseausgestaltung an unterschiedlichen Positionen vorgesehen sein. Wird die Fluidkammer axial am saugseitigen Ende über einen Radialflansch des Spindelgehäuses begrenzt, so kann ein erstes Dichtelement in einer Aufnahmenut am dem Einlassanschluss benachbarten Radialflansch des Spindelgehäuses oder des Außengehäuses aufgenommen sein und das Spindelgehäuse zum Außengehäuse hin abdichten. Ein zweites Dichtelement dient zur Abdichtung an der Druckseite. Hier sind unterschiedliche Varianten denkbar. So kann ein zweites Dichtelement in einer Aufnahmenut des Zwischenbauteils aufgenommen sein und das Zwischenbauteil zum Außengehäuse hin abdichten. Kommt ein solches nicht zum Einsatz, sondern ist der Antriebsmotor direkt an das Außengehäuse geflanscht, so kann ein zweites Dichtelement in einer Aufnahmenut eines Motorgehäuses des Antriebsmotors aufgenommen sein und das Motorgehäuse zum Außengehäuse hin abdichten. Als Dichtelemente kommen zweckmäßigerweise Dichtringe aus einem geeigneten Elastomer zum Einsatz.

Erfolgt saugseitig keine Abdichtung oder axiale Begrenzung über einen Radialflansch, sondern über ein Deckelbauteil, so kann in einer alternativen Pumpenausführung ein erstes Dichtelement in einer Aufnahmenut am Spindelgehäuse oder am Deckelbauteil aufgenommen sein und das Spindelgehäuse zum Deckelbauteil hin abdichten. Hierüber wird eine erste Dichtebene zwischen dem Deckelbauteil und dem Spindelgehäuse realisiert. Weiterhin kann ein zweites Dichtelement in einer Aufnahmenut am Außengehäuse oder am Deckelbauteil aufgenommen sein und das Außengehäuse zum Deckelbauteil hin abdichten. Hierüber wird die zweite Abdichtebene zwischen dem Deckelbauteil und dem Außengehäuse realisiert.

Zur druckseitigen Abdichtung sind auch hier, wie bereits zur vorstehenden Ausführungsform beschrieben, zwei Varianten denkbar. So kann entweder ein drittes Dichtelement in einer Aufnahmenut des Zwischenbauteils oder des Außengehäuses aufgenommen sein und das Zwischenbauteil zum Außengehäuse hin abdichten. Kommt kein solches Zwischenbauteil zum Einsatz, so kann ein drittes Dichtelement in einer Aufnahmenut eines Motorgehäuses des Antriebsmotors aufgenommen sein und das Motorgehäuse zum Außengehäuse hin abdichten.

Wie beschrieben, ermöglicht der erfindungsgemäß über die Fluidkammer realisierte Fluid- oder Druckmantel die gezielte Erzeugung eines allseitigen, radialen Stabilisierungsdrucks auf das Spindelgehäuse, um Ausweitungen der Toleranzen am Spindelgehäuse oder etwaige betriebsbedingte, geringe Geometrieänderungen zu vermeiden. Dies insbesondere, wenn das Spindelgehäuse aus Kunststoff gefertigt ist, wie es erfindungsgemäß vorgesehen sein kann. Zusätzlich oder alternativ ist es auch denkbar, das Außengehäuse, das Zwischenbauteil oder/das Deckelbauteil aus Kunststoff zu fertigen. Das heißt, dass es möglich ist, alle gehäuserelevanten Bauteile aus Kunststoff zu fertigen, wie darüber hinaus aber auch grundsätzlich die Möglichkeit besteht, selbst die Spindeln aus Kunststoff herzustellen. Bevorzugt jedoch sind zumindest diese aus Metall.

Wie bereits beschrieben, kann die Schraubenspindelpumpe einen Antriebsmotor aufweisen, der mittels einer Antriebswelle mit der Antriebsspindel gekoppelt ist, und der entweder als Trockenläufer ausgeführt ist, wobei die Antriebsspindel über einen Wellendichtring radial abgedichtet ist, oder der als Nassläufer ausgeführt ist, wobei ein Teil des vom Spindelgehäuse axial austretenden Fluids längs der Antriebswelle in den Antriebsmotor strömt.

Bei der Schraubenspindelpumpe kann es sich um eine 2-Spindel-Pumpe handeln, die nur eine Antriebsspindel und eine seitlich dazu positionierte Laufspindel aufweist. Alternativ ist es auch denkbar, dass die Schraubenspindelpumpe eine 3-Spindel-Pumpe ist, mit einer mittigen Antriebsspindel und zwei beidseits davon, um 180° versetzt angeordneten Laufspindeln. Es sind also unterschiedliche Pumpentypen mit der erfindungsgemäßen Fluid- oder Druckkammer um das Innengehäuse herum realisierbar.

Weiterhin kann vorgesehen sein, dass der Einlassanschluss mit einer Zentralachse des die Antriebsspindel und die eine oder die beiden Lauspindeln umfassenden Spindelpakets fluchtend angeordnet ist. Das heißt, dass der Einlassstutzen quasi in axialer Verlängerung der Zentralachse des Spindelpakets angeordnet ist. Bei einer 2-spindeligen Schraubenspindelpumpe liegt diese Zentralachse letztlich mittig zwischen der Antriebs- und der Laufspindel. Bei einer 3-Spindel-Pumpe liegt diese Zentralachse in der Längsachse der mittigen Antriebsspindel. Diese Ausgestaltung ermöglicht es mit besonderem Vorteil, dass das zuströmende, axial angesaugte Fluid innerhalb des Außengehäuses nicht erst zum Spindelgehäuse hin umgelenkt werden muss, was gegebenenfalls mit Strömungsgeräuschen verbunden ist. Vielmehr ist ein unmittelbarer axialer Zustrom vom Einlassanschluss in das Spindelgehäuse möglich.

Neben der Schraubenspindelpumpe selbst betrifft die Erfindung ferner die Verwendung einer Schraubenspindelpumpe der vorstehend beschriebenen Art in einem Kraftfahrzeug zum Fördern einer Betriebsflüssigkeit. Diese Betriebsflüssigkeit kann beliebiger Natur sein. Es kann sich beispielsweise um eine Reinigungsflüssigkeit handeln, beispielsweise eine Scheibenreinigungsflüssigkeit, die über die Pumpe gefördert wird. Alternativ, und ein bevorzugter erfindungsgemäßer Verwendungszweck, ist die Verwendung der Schraubenspindelpumpe als Kühlmittelpumpe, über die ein Kühlmittel gefördert wird. Bei dem Kühlmittel kann es sich um ein beliebiges fluides Kühlmittel handeln. Die Verwendung betrifft insbesondere den Einsatz zum Fördern eines der Kühlung eines Energiespeichers dienenden Kühlmittels. Ein solcher Energiespeicher kommt zunehmend bei elektromotorisch angetriebenen Kraftfahrzeugen zum Einsatz und ist in Form einer entsprechend dimensionierten Traktions- oder Antriebsbatterie vorgesehen. Dieser Energiespeicher bedarf einer entsprechenden Kühlung mittels eines Kühlmittels, das über die erfindungsgemäße Schraubenspindelpumpe auf einfache Weise in der geforderten Menge problemlos gefördert werden kann.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: eine Prinzipdarstellung einer erfindungsgemäßen Schraubenspindelpumpe einer ersten Ausführungsform in einer Schnittansicht,
- Fig. 2: die Schraubenspindelpumpe aus Fig. 1 mit eingezeichneten Strömungspfeilen,
- Fig. 3: eine Explosionsdarstellung der Schraubenspindelpumpe aus den Figuren 1 und 2,
- Fig. 4: eine Teilansicht einer erfindungsgemäßen Schraubenspindelpumpe einer weiteren Ausführungsform in einer teilgeschnittenen Perspektivansicht,
- Fig. 5: eine Teilansicht der Anordnung aus Fig. 4 in einem Längsschnitt durch das bei dieser Ausführungsform vorgesehene Zwischenbauteil,
- Fig. 6: eine Ansicht entsprechend Fig. 5 in einem Querschnitt, und
- Fig. 7: eine Perspektivansicht einer erfindungsgemäßen Schraubenspindelpumpe einer weiteren Ausführungsform.

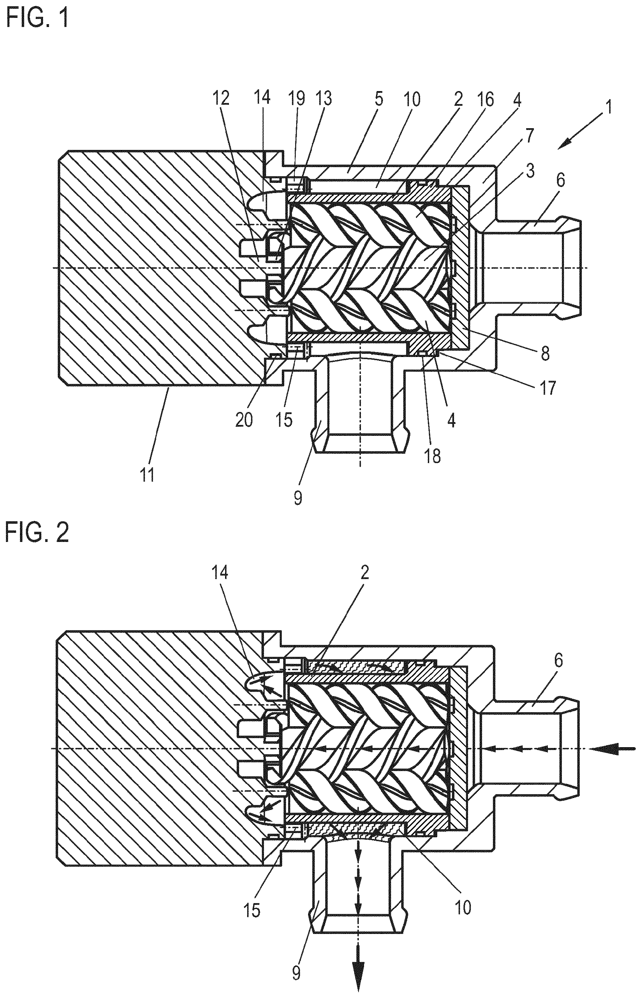

Fig.1 zeigt eine erfindungsgemäße Schraubenspindelpumpe 1 einer ersten Ausführungsform. Diese umfasst ein Spindelgehäuse 2, in dem im gezeigten Beispiel drei Spindeln, nämlich eine Antriebsspindel 3 sowie zwei um 180° seitlich versetzt neben der Antriebsspindel 3 positionierte Laufspindeln 4, die in entsprechenden, einander schneidenden Spindelbohrungen aufgenommen sind. Wie Fig. 1 zeigt, weisen alle Spindeln entsprechende Spindelprofile auf, die ineinandergreifen und miteinander kämmen.

Das Spindelgehäuse 2 ist in einem topfartigen Außengehäuse 5 aufgenommen, an dem ein hier mittiger und fluchtend mit der Längsachse der Antriebsspindel 3 positionierter Einlassanschluss 6, also ein entsprechender Anschlussstutzen, vorgesehen ist. Gegenüber dem Außengehäuse 5 bzw. dessen Radialflansch 7 ist das Spindelpaket aus Antriebsspindel 3 und Laufspindeln 4 axial über ein Stützelement, hier eine Passfeder 8 abgestützt.

Am Außengehäuse 5 ist des Weiteren ein radialer Auslassanschluss 9, auch hier ein Anschlussstutzen, vorgesehen, über den das über den Einlassanschluss 6 angesaugte und unter Druck stehende Fluid wieder radial austritt.

Wie Fig. 1 anschaulich zeigt, ist das Spindelgehäuse 2 nebst seinen Bestandteilen im Inneren des topfförmigen Außengehäuses 5 aufgenommen. Zwischen der Außenwandung des Innengehäuses 2 und der Innenwandung des Außengehäuses 5 ist eine um 360° umlaufende Fluidkammer 10 vorgesehen, die sich, wie Fig. 1 zeigt, um mehr als die Hälfte der Länge des Spindelgehäuses 2 respektive der Spindelbohrungen erstreckt. In diese Fluidkammer 10 gelangt das am axialen Fluidauslass des Spindelgehäuses 2 austretende, unter Druck stehende Fluid, das heißt, dass der axiale Fluidauslass am linken Ende des Spindelgehäuses 2 mit der Fluidkammer 10 kommuniziert. Diese kommuniziert ihrerseits wieder mit dem Auslassanschluss 9.

Vorgesehen ist des Weiteren ein hier nur stilisiert angedeuteter Antriebsmotor 11, der hier direkt auf das Außengehäuse 5 aufgesetzt und dort befestigt ist. Mit einer ebenfalls nur stilisiert dargestellten Antriebswelle 12 ist der Antriebsmotor 11 über ein Kupplungselement 13 mit der Antriebsspindel 3 gekoppelt, sodass diese über den Antriebsmotor 11 aktiv gedreht werden kann, sodass das gesamte Spindelpaket rotiert und das über den Einlassanschluss 6 angesaugte Fluid axial fördert.

Wie beschrieben tritt das Fluid aus dem axialen Fluidauslass des Spindelgehäuses 2, das bei dieser Ausgestaltung an dem druckseitigen Ende einfach axial offen ist, aus. Damit das Fluid in die Fluidkammer, die ja, was die Förderrichtung angeht, axial zurückversetzt ist, gelangen kann, ist im gezeigten Beispiel eine Umlenkkavität 14 vorgesehen, die im gezeigten Beispiel an der dem Spindelgehäuse 2 zugewandten Gehäusewand des Antriebsmotors 11 unmittelbar ausgebildet ist. Diese Umlenkkavität 14 auf die nachfolgend noch eingegangen wird, ist beispielsweise als umlaufende Ringnut ausgebildet und bodenseitig gewölbt oder gerundet ausgeführt, sodass das Fluid, das quasi mittig einströmt, zur Seite hin radial nach außen umgelenkt und zurückgeführt wird, sodass es über entsprechende Durchbrechungen 15, die an einem Radialflansch 19 des Spindelgehäuses 2 ausgebildet sind, in die Fluidkammer 10 treten kann.

Die Fluidkammer 10 ist am saugseitigen Ende axial über einen Radialflansch 16 des Spindelgehäuses 2 begrenzt. Dieser ist einerseits an einer Gehäuseschulter 17 des Außengehäuses axial abgestützt. Zum anderen erstreckt er sich bis zur Innenwandung des Außengehäuses 5 und ist zu diesem über ein Dichtelement 18 abgedichtet, sodass die Fluidkammer 10 an diesem Ende geschlossen und abgedichtet ist. Am gegenüberliegenden, druckseitigen Ende ist ebenfalls ein Radialflansch 19 vorgesehen, in dem jedoch die bereits beschriebenen Durchbrechungen 15 ausgebildet sind, sodass die Fluidkammer 10 zu dieser Druckseite hin offen ist und das unter Druck stehende Fluid über die Umlenkkavität 14 in die Fluidkammer 10 strömen kann. Die Abdichtung an dieser Seite erfolgt zwischen dem Außengehäuse 5 und dem Motorgehäuse über ein geeignetes Dichtelement 20, sodass insgesamt eine fluiddichte Kapselung gegeben ist.

Im Betrieb wird die Antriebsspindel 3 über den Antriebsmotor 11 angetrieben, sodass das ganze Spindelpaket rotiert. Das über den Einlassanschluss 6 angesaugte Fluid wird axial gefördert, indem die Spindelprofile der Spindeln 3, 4 ineinander eingreifen, sodass sich axial verschobene Fördervolumina ergeben, die eine Förderung des Fluids längs des Spindelpakets erlauben.

Am druckseitigen Ende des Spindelgehäuses 2 tritt das Fluid axial aus, was vorteilhaft hinsichtlich eines möglichst geräuscharmen Betriebs ist, da hiermit keine nennenswerten Strömungsgeräusche verbunden sind. Das Fluid tritt sodann direkt in die Umlenkkavität 14, wie beschrieben beispielsweise eine Ringnut oder konkave Vertiefung, ein, über die es einerseits radial nach außen gelenkt wird und axial zurückgeführt wird, also entgegen der Förderrichtung des Spindelpakets umgelenkt wird. Es tritt über die Durchbrechungen 15 in die Fluidkammer 10 ein und über diese in den Auslassanschluss 9, wo es abgeführt wird.

In der Fluidkammer 10 herrscht wie beschrieben der Pumpendruck, das heißt, dass in dieser das Spindelgehäuse 2 allseitig umgebenden Fluidkammer 10 der Auslassdruck, der über die Schraubenspindelpumpe 1 erzeugt werden kann, anliegt. Dieser Druck wirkt allseitig radial auf das Spindelgehäuse 2, soweit dieses von der Fluidkammer 10, die auch als Druckkammer bezeichnet werden kann, umgriffen ist. Wie beschrieben erstreckt sich diese Fluidkammer 10 über wenigstens die halbe Länge des Spindelgehäuses 2, bevorzugt sogar etwas länger, sodass eine bestmögliche Stabilisierung des Spindelgehäuses 2 gegenüber etwaigen druckbedingten Geometrieänderungen respektive Toleranzverschiebungen gegeben ist. Dies gilt insbesondere in dem Fall, wenn das Spindelgehäuse 2 aus Kunststoff gefertigt ist, also aus einem gegenüber Metall etwas weicheren Material.

Fig. 2 zeigt die gleiche Darstellung wie Fig. 1, nur sind in dieser zur Darstellung des Fluidflusses entsprechende Strömungspfeile eingezeichnet. Wie Fig. 2 zeigt, wird das Fluid, beispielsweise Wasser, Kraftstoff, ein Kühlmittel oder Ähnliches, am Einlassanschluss 6 angesaugt und über das Spindelpaket axial durch das Spindelgehäuse 2 gefördert. Es tritt am druckseitigen Ende des offenen Spindelgehäuses 2 aus und gelangt in die Umlenkkavität 14, wo es, unterstützt durch die Geometrie dieser Umlenkkavität, die wie gesagt bodenseitig gerundet ist, radial nach außen und entgegen der Einströmrichtung umgelenkt wird, sodass es durch die Durchbrechungen 15 axial zurück in die Fluidkammer 10 strömen kann, die es allseitig füllt. Aus dieser Fluidkammer 10 gelangt es sodann zum Auslassanschluss 9, wo es dann unter Druck abströmt.

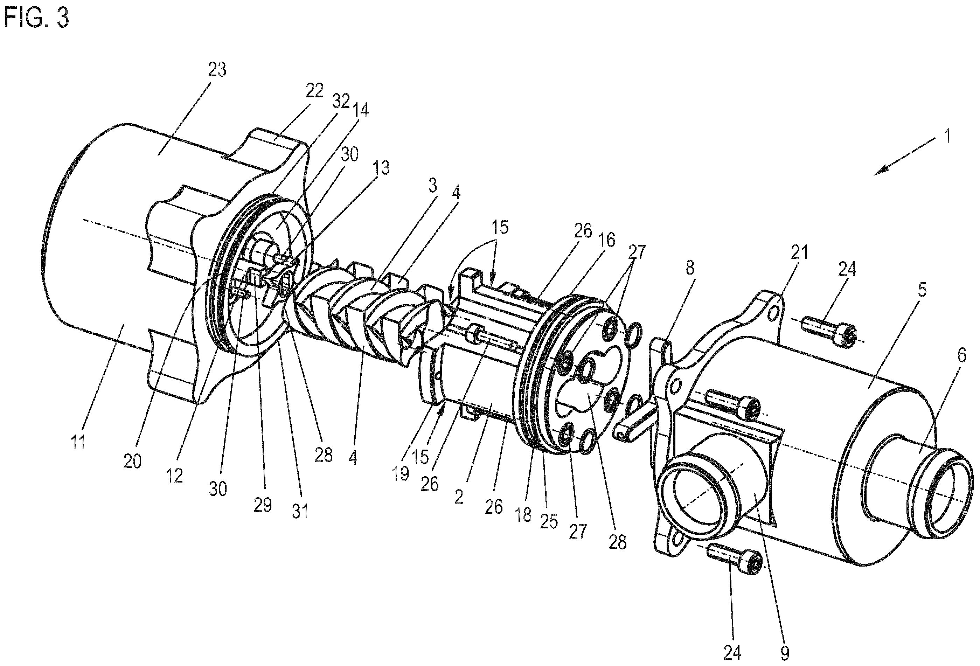

Eine Explosionsansicht der Schraubenspindelpumpe 1 aus den Figuren 1 und 2 ist in Fig. 3 gezeigt. Rechts beginnend ist das Außengehäuse 5 mit seinem axialen Einlassanschluss 6 sowie seinem radialen Auslassanschluss 9 gezeigt, das am in der Montagestellung dem Antriebsmotor 11 zugewandten Ende einen Montageflansch 21 aufweist, der mit einem entsprechenden Montageflansch 22 am Motorgehäuse 23 des Antriebsmotors mittels geeigneter Befestigungsschrauben 24 befestigt wird.

Gezeigt ist nächstfolgend die hier kreuzförmige Passfeder 8, an der die Antriebsspindel 3 sowie die Laufspindeln 4 axial abgestützt sind. Die kreuzförmige Ausgestaltung der Passfeder 8 ermöglicht es, das Spindelgehäuse 2 in zwei um 90° versetzten Ausrichtungen relativ zum Außengehäuse 5 zu montieren, wobei in jeder der beiden Montagepositionen die Spindeln 3, 4 axial an der Passfeder 8 abgestützt sind.

Gezeigt ist des Weiteren das Spindelgehäuse 2 mit seinem Radialflansch 16, an dem eine entsprechende Aufnahmenut 25 ausgebildet ist, in der das Dichtelement 18 aufgenommen ist, das in der Montagestellung zum Außengehäuse 5 hin abdichtet. Die Verbindung des Spindelgehäuses 2 mit dem Außengehäuse 5 erfolgt über entsprechende Verbindungsschrauben 26, die entsprechende Bohrungen 27 im Radialflansch 16 durchgreifen und nicht näher gezeigte Gewindebohrungen am Außengehäuse 5 eingeschraubt werden.

Gezeigt sind des Weiteren die Antriebsspindel 3 sowie die beiden Laufspindeln 4, die in die Spindelbohrungen 28, die, wie Fig. 3 zeigt, einander schneiden, eingesetzt sind.

Weiterhin gezeigt ist das Kupplungselement 13, das drehfest in einer entsprechenden Aufnahme an der axialen Stirnseite der Antriebsspindel 3 eingesetzt ist und das eine entsprechende Einsteckaufnahme 28 aufweist, in die ein Einsteckzapfen 29 der Antriebswelle 12 des Antriebsmotors 11 eingreift, sodass eine drehfeste Verbindung der Antriebswelle 12 mit der Antriebsspindel 3 gegeben ist. Gezeigt sind ferner zwei an dem Motorgehäuse 23 vorgesehene Stützlager 30 in Form axial vorspringender Zapfen, die der axialen Abstützung respektive Lagerung der beiden Laufspindeln 4 dienen. Weiterhin gezeigt ist ein Axialflansch 31, der am Motorgehäuse 23 ausgebildet ist, und der eine entsprechende Radialnut 23 aufweist, in der das zum Außengehäuse 5 hin abdichtende Dichtelement 20 eingesetzt ist.

Die Fluidkammer 10 ist über den Radialflansch 16, wie beschrieben, zur Saugseite hin abgegrenzt. Gezeigt ist auch der Radialflansch 19, der über die Durchbrechungen 15 jedoch geöffnet ist, sodass das Fluid aus der Umlenkkavität 14, die am Motorgehäuse 23 angedeutet ist, in die Fluidkammer 10 strömen kann.

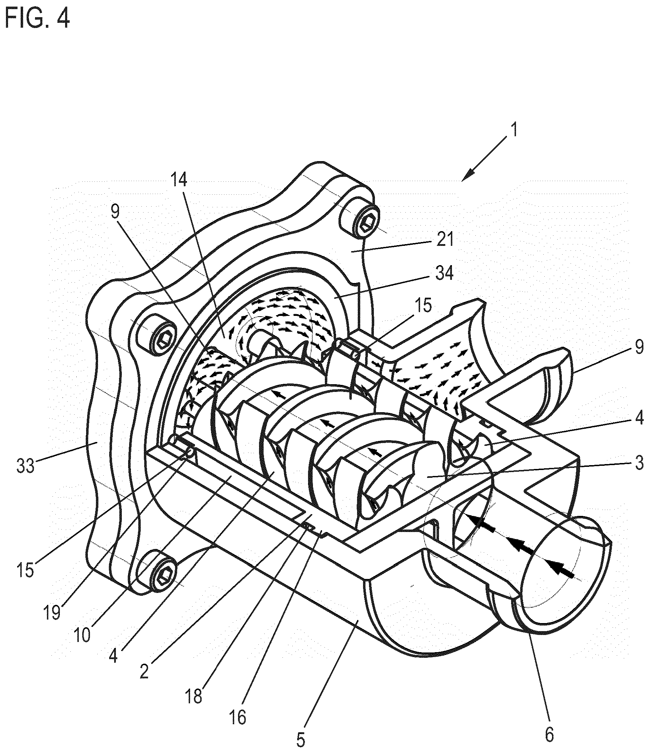

Fig. 4 zeigt eine Teilansicht einer erfindungsgemäßen Schraubenspindelpumpe einer weiteren Ausführungsform, deren Aufbau der Ausgestaltung aus den Figuren 1 - 3 entspricht. Vorgesehen ist hier wiederum ein Außengehäuse 5 mit einem axialen Einlassanschluss 6 und einem radialen Auslassanschluss 7 sowie ein Spindelgehäuse 2 mit darin vorgesehener Antriebsspindel 3 und zwei Laufspindeln 4. Ebenso ausgebildet ist wiederum eine Fluidkammer 10 zwischen dem Innengehäuse 2 und dem Außengehäuse 5, die sich um 360° um das Spindelgehäuse 2 und axial gesehen über wenigstens die Hälfte der Länge des Spindelgehäuses erstreckt. Die Abdichtung erfolgt saugseitig wiederum über einen entsprechenden Radialflansch 16 und ein in der Nut 25 aufgenommenes Dichtelement 18.

Anders als bei der vorstehend beschriebenen Ausgestaltung ist hier das Motorgehäuse 23 nicht direkt auf den Montageflansch 21 des Außengehäuses 5 aufgesetzt, vielmehr ist bei dieser Variante ein Zwischenbauteil 33 in Form einer Zwischenplatte vorgesehen, das zwischen dem Montageflansch 21 und dem Montageflansch 22 gesetzt ist. An diesem Zwischenbauteil 33, der einen entsprechenden Axialflansch 34 aufweist, mit dem er axial in das Außengehäuse 5 eingreift, ist die ringnutförmige oder auch kalottenförmige Umlenkkavität 14 ausgebildet. Der Antriebsmotor 11 durchgreift mit seiner Antriebswelle 9 eine entsprechende Bohrung in diesem Zwischenbauteil und ist, wie bereits vorstehend beschrieben, über ein Kupplungselement 13 mit der Antriebsspindel 3 gekoppelt.

Bei dieser Erfindungsvariante ist demzufolge die Fluidumlenkung über das plattenförmige Zwischenbauteil 33 realisiert, an dem die Umlenkkavität 14 ausgebildet ist. Diese ist wiederum derart geformt, dass das Fluid radial nach außen gefördert und entgegen der Zuführrichtung umgelenkt wird, sodass es über die entsprechenden Durchbrechungen 15 im Radialflansch 19 des Spindelgehäuses 2 in die Fluidkammer 10 einströmen kann und in der Fluidkammer 10 der entsprechende Stabilisierungsdruck aufgebaut werden kann.

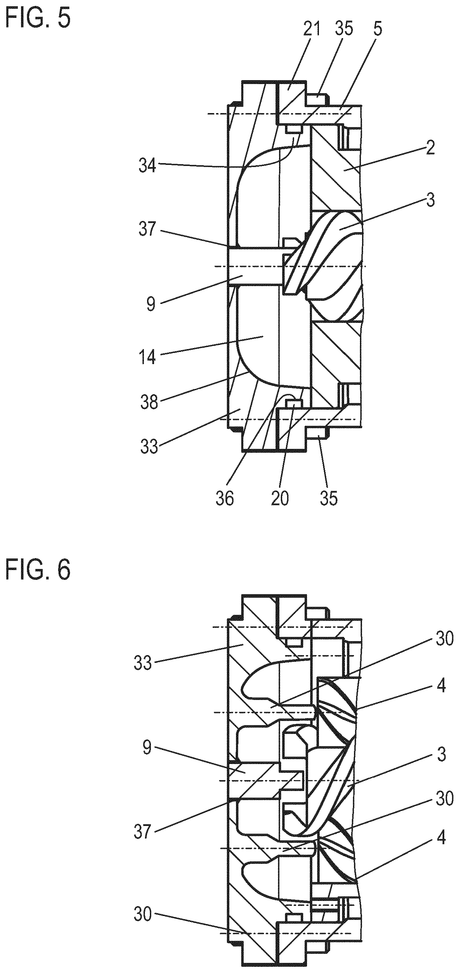

Die Figuren 5 und 6 zeigen zwei um 90° versetzte Schnittansichten durch das plattenförmige Zwischenbauteil 3. Diese ist wie gezeigt mit dem Montageflansch 21 des Außengehäuses 5 über entsprechende Befestigungsschrauben 35 verschraubt, wobei bei dieser Ausgestaltung das Dichtelement 20 in einer entsprechenden Ringnut 36, die an dem Axialflansch 34 ausgebildet ist, aufgenommen ist und radial zum Außengehäuse 5 hin abdichtet.

Gezeigt ist des Weiteren die mittige Bohrung 37, durch die die Antriebswelle 9 greift. Dem Zwischenbauteil 37 kommt hier auch die Funktion eines Motorlagers zu, nachdem die Antriebswelle letztlich in dieser Bohrung 37 auch gelagert respektive geführt ist. Befindet sich in dieser Bohrung 37 ein Dichtelement in Form eines Wellendichtrings, so ist ein axialer Durchfluss des in die Umlenkkavität 14 einströmenden Fluids längs der Antriebswelle 9 ausgeschlossen, der Antriebsmotor 11 wäre dann ein Trockenläufer. Befindet sich in der Bohrung 37 kein Wellendichtring, so kann ein geringer Anteil an Fluid axial längs der Antriebswelle 9 in den Antriebsmotor 11 strömen und diesen kühlen.

In der in Fig. 5 gezeigten Schnittansicht ist deutlich die Ring- oder Kalottenform der Umlenkkavität 14 zu erkennen, die eine gerundete Bodenfläche 38 aufweist, die die Fluidumlenkung fördert. Die Schnittebene läuft hier durch die Antriebsspindel 3, nicht aber durch die Laufspindeln 4.

Eine um 90° gedrehte Schnittansicht ist in Fig. 6 gezeigt, hier verläuft die Schnittebene durch die Antriebsspindel 4. Diese Schnittansicht zeigt die beiden Stützlager 30 in Form der Stützzapfen, wobei diese Stützlager 30 hier einstückig an dem Zwischenbauteil 33 angeformt sind. An jedem Stützlager 30 ist eine Laufspindel 4 axial abgestützt.

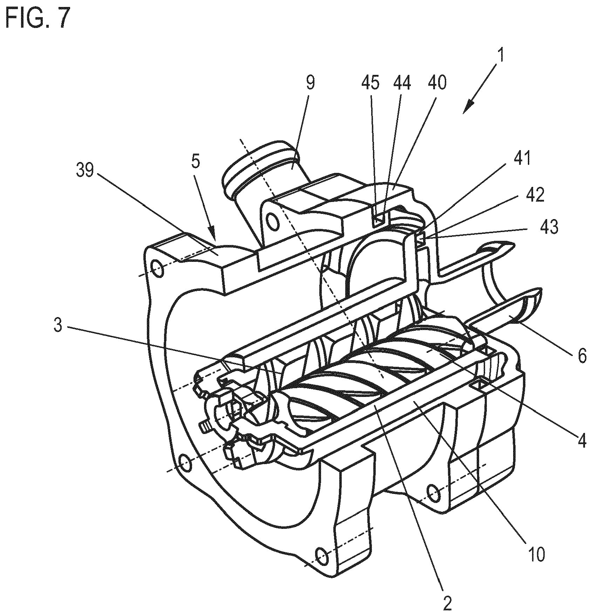

Fig. 7 zeigt schließlich eine dritte Ausführungsform einer erfindungsgemäßen Schraubenspindelpumpe 1, umfassend ein Außengehäuse 5, das hier aus einem zylindrischen Basisteil 39 und einem axial darauf aufgesetzten Deckelbauteil 40 besteht, das zur Saugseite hin das Außengehäuse 5 abschließt. An der gegenüberliegenden Druckseite wird der Antriebsmotor 11 angeordnet, der entweder direkt mit dem Basisteil 39 verschraubt werden kann, oder über ein Zwischenbauteil 33, wie ebenfalls vorstehend beschrieben.

Vorgesehen ist des Weiteren ein Spindelgehäuse 2, in dem hier nur eine Antriebsspindel 3 und eine Laufspindel 4 aufgenommen ist. Es handelt sich also, anders als bei den Ausgestaltungen gemäß der Figuren 1 - 6, um eine 2-Spindel-Pumpe. Das grundsätzliche Funktionsprinzip ist jedoch das gleiche.

Der Einlassanschluss 6 ist hier bei dieser Ausgestaltung am Deckelbauteil 40 ausgebildet, ebenso der Auslassanschluss 9. Das heißt, dass das Deckelbauteil 40 einerseits den axialen Abschluss bildet, andererseits aber auch den Einlass- und den Auslassanschluss 6, 9 aufweist.

Zur Abdichtung ist hier ein Axialflansch 41 am Deckelbauteil 40 ausgebildet, mit einer Ringnut 42, in die ein Dichtelement 43 in Form eines Dichtrings eingesetzt ist. Hierüber erfolgt eine axiale Abdichtung zum Spindelgehäuse 2 hin.

Eine weitere Dichtebene ist zwischen dem Deckelbauteil 40 und dem Basisteil 39 vorgesehen. Am Basisteil 39 ist wiederum eine radial offene Ringnut 44 ausgebildet, in der ein Dichtelement 45 in Form eines Dichtrings aufgenommen ist, der radial zum Deckelbauteil 40 hin abdichtet.

Über diese Dichtstrukturen wird auch bei dieser Variante eine um das Spindelgehäuse 2 umlaufende Fluidkammer 10 an der Saugseite axial begrenzt und abgedichtet. Diese Fluidkammer 10 erstreckt sich bei dieser Variante über die gesamte Länge des Spindelgehäuses 2, da, wie bereits zu den vorstehenden Ausführungsformen beschrieben, das Fluid am axial offenen, druckseitigen Ende des Spindelgehäuses 2 axial austritt und über die Umlenkkavität 14 wieder umgelenkt und zurück in die Fluidkammer 10 geführt wird. Wie beschrieben kann die Umlenkkavität 14 entweder direkt an der entsprechenden Bodenwand des Motorgehäuses 23 ausgebildet sein, oder an dem plattenförmigen Zwischenbauteil 33.

In jedem Fall bildet sich auch hier innerhalb der Fluidkammer 10 ein entsprechender Druck auf, der allseitig radial auf das Spindelgehäuse 2 wirkt. Die Fluidkammer 10 kommuniziert natürlich auch hier mit dem Auslassanschluss 9, wie Fig. 7 anschaulich zeigt.

## Patentansprüche

1. Schraubenspindelpumpe, mit einem Spindelgehäuse (2), in dem eine Antriebsspindel (3) und wenigstens eine mit dieser kämmende Laufspindel (4) in Spindelbohrungen (28) aufgenommen sind, **gekennzeichnet durch** ein das Spindelgehäuse (2) einhausendes Außengehäuse (5), an dem ein axialer Einlassanschluss (6) und ein radialer Auslassanschluss (9) vorgesehen sind, wobei das Spindelgehäuse (2) einen axialen Fluidauslass für das über die Antriebs- und die Laufspindel (3, 4) durch das Spindelgehäuse (2) geförderte Fluid aufweist, der mit einer zwischen dem Spindelgehäuse (2) und dem Außengehäuse (5) ausgebildeten, sich um 360° erstreckenden Fluidkammer (10) kommuniziert, die wiederum mit dem radialen Auslassanschluss (9) kommuniziert.

2. Schraubenspindelpumpe nach Anspruch 1, **dadurch gekennzeichnet, dass** sich die Fluidkammer (10) über wenigstens die halbe Länge der Spindelbohrung (23) erstreckt.

3. Schraubenspindelpumpe nach Anspruch 1 oder 2, **dadurch gekennzeichnet, dass** die Fluidkammer (10) entweder über zwei Radialflansche (16, 19) axial begrenzt ist, wobei der eine Radialflansch (19) mehrere axiale Durchbrechungen (15) )aufweist, über die die Fluidkammer (10) mit dem Fluidauslass des Spindelgehäuses (2) verbunden ist, oder dass die Fluidkammer über einen Radialflansch (19) einerseits, der mehrere axiale Durchbrechungen (15) aufweist, über die die Fluidkammer (10) mit dem Fluidauslass des Spindelgehäuses (2) verbunden ist, und andererseits über ein Deckelbauteil (40) axial begrenzt ist.

4. Schraubenspindelpumpe nach einem der vorangehenden Ansprüche, **dadurch gekennzeichnet, dass** ein auf das Außengehäuse (5) aufgesetztes Zwischenbauteil (33) vorgesehen ist, das zum Anbinden eines Antriebsmotors (11) ausgebildet ist, wobei an dem Zwischenbauteil (33) eine oder mehrere, das vom Fluidauslass des Spindelgehäuses (2) kommende Fluid zur Fluidkammer (10) umlenkende Umlenkkavitäten (14) vorgesehen sind.

5. Schraubenspindelpumpe nach einem der Ansprüche 1 bis 3, **dadurch gekennzeichnet, dass** an einem Gehäuse (23) eines auf das Außengehäuse (5) aufgesetzten Antriebsmotors (11) eine oder mehrere, das vom Fluidauslass des Spindelgehäuses (2) kommende Fluid zur Fluidkammer (10) umlenkende Umlenkkavitäten (14) vorgesehen sind.

6. Schraubenspindelpumpe nach Anspruch 4 oder 5, **dadurch gekennzeichnet, dass** die eine Umlenkkavität (14) eine ringförmige Nut oder topfartige Vertiefung ist, die im Bereich des Nut- oder Vertiefungsgrunds rundlich ausgeführt ist.

7. Schraubenspindelpumpe nach einem der vorangehenden Ansprüche, **dadurch gekennzeichnet, dass** die Fluidkammer (10) über ein oder mehrere Dichtelemente (18, 20, 36, 43, 45, zum Außengehäuse (5) hin abgedichtet ist.

8. Schraubenspindelpumpe nach Anspruch 3 und Anspruch 4, 5 oder 6, und Anspruch 7, **dadurch gekennzeichnet, dass** ein erstes Dichtelement (18) in einer Aufnahmenut (25) am dem Einlassanschluss (6) benachbarten Radialflansch (16) des Spindelgehäuses (2) oder des Außengehäuses (5) aufgenommen ist und das Spindelgehäuse (2) zum Außengehäuse (5) hin abdichtet, und dass ein zweites Dichtelement (20) in einer Aufnahmenut (36) des Zwischenbauteils (33) aufgenommen ist und das Zwischenbauteil (33) zum Außengehäuse (5) hin abdichtet, oder dass ein zweites Dichtelement (20) in einer Aufnahmenut (32) eines Motorgehäuses (23) des Antriebsmotors (11) aufgenommen ist und das Motorgehäuse (23) zum Außengehäuse (5) hin abdichtet.

9. Schraubenspindelpumpe nach Anspruch 3 und Anspruch 4, 5 oder 6, und Anspruch 7, **dadurch gekennzeichnet, dass** ein erstes Dichtelement (43) in einer Aufnahmenut (42) am Spindelgehäuse (2) oder am Deckelbauteil (40) aufgenommen und das Spindelgehäuse (2) zum Deckelbauteil (40) hin abdichtet, dass ein zweites Dichtelement in einer Aufnahmenut (44) am Außengehäuse (5) oder am Deckelbauteil (40) aufgenommen ist und das Außengehäuse (5) zum Deckelbauteil (40) hin abdichtet, und dass ein drittes Dichtelement (20) in einer Aufnahmenut (36) des Zwischenbauteils (33) oder des Außengehäuses (5) aufgenommen ist und das Zwischenbauteil (33) zum Außengehäuse (5) hin abdichtet, oder dass ein drittes Dichtelement (20) in einer Aufnahmenut (32) eines Motorgehäuses (23) des Antriebsmotors (11) aufgenommen ist und das Motorgehäuse (23) zum Außengehäuse (5) hin abdichtet.

10. Schraubenspindelpumpe nach einem der vorangehenden Ansprüche, **dadurch gekennzeichnet, dass** das Spindelgehäuse (2), das Außengehäuse (5), das Zwischenbauteil (33) und/oder das Deckelbauteil (40) aus Kunststoff sind.

11. Schraubenspindelpumpe nach einem der vorangehenden Ansprüche, **dadurch gekennzeichnet, dass** ein Antriebsmotor (11) vorgesehen ist, der mit einer Antriebswelle (9) mit der Antriebsspindel (3) gekoppelt ist, und der entweder als Trockenläufer ausgeführt ist, wobei die Antriebswelle (9) über einen Wellendichtring radial abgedichtet ist, oder der als Nassläufer ausgeführt ist, wobei ein Teil des vom Spindelgehäuse (2) axial austretenden Fluids längs der Antriebswelle (9) in den Antriebsmotor (11) strömt.

12. Schraubenspindelpumpe nach einem der vorangehenden Ansprüche, **dadurch gekennzeichnet, dass** eine mittige Antriebsspindel (3) und zwei beidseits davon angeordnete Laufspindeln (4) vorgesehen sind.

13. Schraubenspindelpumpe nach einem der vorangehenden Ansprüche, **dadurch gekennzeichnet, dass** der Einlassanschluss (6) mit einer Zentralachse des die Antriebsspindel (3) und die eine oder die beiden Laufspindeln (4) umfassenden Spindelpakets fluchtend angeordnet ist.

14. Verwendung einer Schraubenspindelpumpe (1) nach einem der vorangehenden Ansprüche in einem Kraftfahrzeug zum Fördern einer Betriebsflüssigkeit.

15. Verwendung nach Anspruch 14, **dadurch gekennzeichnet, dass** die Schraubenspindelpumpe (1) als Kühlmittelpumpe, insbesondere zum Fördern eines der Kühlung eines Energiespeichers dienenden Kühlmittels verwendet wird.

## Claims

1. Screw spindle pump having a spindle housing (2), in which a drive spindle (3) and at least one running spindle (4) which meshes therewith are received in spindle bores (28), **characterized by** an outer housing (5) which encloses the spindle housing (2) and on which an axial inlet port (6) and a radial outlet port (9) are provided, wherein the spindle housing (2) has an axial fluid outlet for the fluid delivered through the spindle housing (2) by the drive spindle and the running spindle (3, 4), which axial fluid outlet communicates with a fluid chamber (10), which is formed between the spindle housing (2) and the outer housing (5), extends around 360°, and in turn communicates with the radial outlet port (9).

2. Screw spindle pump according to Claim 1, **characterized in that** the fluid chamber (10) extends over at least half the length of the spindle bore (23).

3. Screw spindle pump according to Claim 1 or 2, **characterized in that** the fluid chamber (10) either is axially delimited by two radial flanges (16, 19), wherein the one radial flange (19) has multiple axial apertures (15) via which the fluid chamber (10) is connected to the fluid outlet of the spindle housing (2), or **in that** the fluid chamber is axially delimited on one side by a radial flange (19), which has multiple axial apertures (15) via which the fluid chamber (10) is connected to the fluid outlet of the spindle housing (2), and on the other side by a cover component (40).

4. Screw spindle pump according to one of the preceding claims, **characterized in that** an intermediate component (33) fitted on the outer housing (5) and designed for the attachment of a drive motor (11) is provided, wherein one or more deflection cavities (14) which deflect the fluid coming from the fluid outlet of the spindle housing (2) toward the fluid chamber (10) are provided on the intermediate component (33).

5. Screw spindle pump according to one of Claims 1 to 3, **characterized in that** one or more deflection cavities (14) which deflect the fluid coming from the fluid outlet of the spindle housing (2) toward the fluid chamber (10) are provided on a housing (23) of a drive motor (11) fitted on the outer housing (5).

6. Screw spindle pump according to Claim 4 or 5, **characterized in that** the one deflection cavity (14) is an annular groove or pot-like depression, which has a round configuration in the region of the groove or depression base.

7. Screw spindle pump according to one of the preceding claims, **characterized in that** the fluid chamber (10) is sealed with respect to the outer housing (5) by one or more seal elements (18, 20, 36, 43, 45).

8. Screw spindle pump according to Claim 3 and Claim 4, 5 or 6, and Claim 7, **characterized in that** a first seal element (18) is received in a receiving groove (25) on the radial flange (16), adjacent to the inlet port (6), of the spindle housing (2) or of the outer housing (5) and seals the spindle housing (2) with respect to the outer housing (5), and **in that** a second seal element (20) is received in a receiving groove (36) of the intermediate component (33) and seals the intermediate component (33) with respect to the outer housing (5), or **in that** a second seal element (20) is received in a receiving groove (32) of a motor housing (23) of the drive motor (11) and seals the motor housing (23) with respect to the outer housing (5).

9. Screw spindle pump according to Claim 3 and Claim 4, 5 or 6, and Claim 7, **characterized in that** a first seal element (43) is received in a receiving groove (42) on the spindle housing (2) or on the cover component (40) and seals the spindle housing (2) with respect to the cover component (40), **in that** a second seal element is received in a receiving groove (44) on the outer housing (5) or on the cover component (40) and seals the outer housing (5) with respect to the cover component (40), and **in that** a third seal element (20) is received in a receiving groove (36) of the intermediate component (33) or of the outer housing (5) and seals the intermediate component (33) with respect to the outer housing (5), or **in that** a third seal element (20) is received in a receiving groove (32) of a motor housing (23) of the drive motor (11) and seals the motor housing (23) with respect to the outer housing (5).

10. Screw spindle pump according to one of the preceding claims, **characterized in that** the spindle housing (2), the outer housing (5), the intermediate component (33) and/or the cover component (40) are made of plastic.

11. Screw spindle pump according to one of the preceding claims, **characterized in that** a drive motor (11) is provided, which is coupled to the drive spindle (3) by way of a drive shaft (9), and which either is in the form of a dry-running rotor, wherein the drive shaft (9) is radially sealed by a shaft sealing ring, or which is in the form of a wet-running rotor, wherein some of the fluid axially exiting the spindle housing (2) flows along the drive shaft (9) into the drive motor (11).

12. Screw spindle pump according to one of the preceding claims, **characterized in that** a central drive spindle (3) and two running spindles (4) arranged on either side of the drive spindle are provided.

13. Screw spindle pump according to one of the preceding claims, **characterized in that** the inlet port (6) is arranged in line with a central axis of the spindle set comprising the drive spindle (3) and the one or the two running spindles (4).

14. Use of a screw spindle pump (1) according to one of the preceding claims in a motor vehicle for the purpose of delivering an operating liquid.

15. Use according to Claim 14, **characterized in that** the screw spindle pump (1) is used as a coolant pump, in particular for delivering a coolant serving to cool an energy store.

## Revendications

1. Pompe à vis, avec un boîtier de vis (2) dans lequel une vis d'entraînement (3) et au moins une vis menée (4) engrenant avec celle-ci sont reçues dans des alésages de vis (28), **caractérisée par** un boîtier extérieur (5) qui entoure le boîtier de vis (2) sur lequel sont prévus un raccord d'entrée axial (6) et un raccord de sortie radial (9), le boîtier de vis (2) présentant une sortie de fluide axiale pour le fluide transporté par l'intermédiaire des vis d'entraînement et menée (3, 4) à travers le boîtier de vis (2), qui communique avec une chambre de fluide (10) réalisée entre le boîtier de vis (2) et le boîtier extérieur (5), s'étendant sur 360°, qui communique à son tour avec le raccord de sortie radial (9).

2. Pompe à vis selon la revendication 1, **caractérisée en ce que** la chambre de fluide (10) s'étend sur au moins la moitié de la longueur de l'alésage de vis (23).

3. Pompe à vis selon la revendication 1 ou 2, **caractérisée en ce que** soit la chambre de fluide (10) est délimitée axialement par le biais de deux rebords radiaux (16, 19), l'un des rebords radiaux (19) présentant plusieurs ouvertures (15) axiales par le biais desquelles la chambre de fluide (10) est reliée à la sortie de fluide du boîtier de vis (2), soit la chambre de fluide est délimitée axialement par le biais d'un rebord radial (19) d'une part, lequel présente plusieurs ouvertures (15) axiales par le biais desquelles la chambre de fluide (10) est reliée à la sortie de fluide du boîtier de vis (2), et par le biais d'un composant formant couvercle (40) d'autre part.

4. Pompe à vis selon l'une des revendications précédentes, **caractérisée en ce qu'**il est prévu un composant intermédiaire (33) placé sur le boîtier extérieur (5), qui est réalisé pour le raccordement d'un moteur d'entraînement (11), une ou plusieurs cavités de déviation (14) déviant le fluide provenant de la sortie de fluide du boîtier de vis (2) vers la chambre de fluide (10) étant prévues sur le composant intermédiaire (33).

5. Pompe à vis selon l'une des revendications 1 à 3, **caractérisée en ce qu'**il est prévu sur un boîtier (23) d'un moteur d'entraînement (11) monté sur le boîtier extérieur (5) une ou plusieurs cavités de déviation (14) déviant le fluide provenant de la sortie de fluide du boîtier de vis (2) vers la chambre de fluide (10).

6. Pompe à vis selon la revendication 4 ou 5, **caractérisée en ce que** la cavité de déviation (14) est une rainure annulaire ou un évidement en forme de pot qui est réalisé(e) de manière arrondie dans la région du fond de rainure ou d'évidement.

7. Pompe à vis selon l'une des revendications précédentes, **caractérisée en ce que** la chambre de fluide (10) est rendue étanche par rapport au boîtier extérieur (5) par l'intermédiaire d'un ou plusieurs éléments d'étanchéité (18, 20, 36, 43, 45).

8. Pompe à vis selon la revendication 3 et la revendication 4, 5 ou 6, et la revendication 7, **caractérisée en ce qu'**un premier élément d'étanchéité (18) est reçu dans une rainure de réception (25) sur le rebord radial (16) du boîtier de vis (2) ou du boîtier extérieur (5) voisin du raccord d'entrée (6) et rend le boîtier de vis (2) étanche par rapport au boîtier extérieur (5), et **en ce qu'**un deuxième élément d'étanchéité (20) est reçu dans une rainure de réception (36) du composant intermédiaire (33) et assure l'étanchéité du composant intermédiaire (33) vers le boîtier extérieur (5), ou **en ce qu'**un deuxième élément d'étanchéité (20) est reçu dans une rainure de réception (32) d'un boîtier de moteur (23) du moteur d'entraînement (11) et assure l'étanchéité du boîtier de moteur (23) vers le boîtier extérieur (5).

9. Pompe à vis selon la revendication 3 et la revendication 4, 5 ou 6, et la revendication 7, **caractérisée en ce qu'**un premier élément d'étanchéité (43) est reçu dans une rainure de réception (42) sur le boîtier de vis (2) ou sur l'élément du couvercle (40) et assure l'étanchéité du boîtier de vis (2) vers l'élément du couvercle (40), **en ce qu'**un deuxième élément d'étanchéité est reçu dans une rainure de réception (44) sur le boîtier extérieur (5) ou sur l'élément du couvercle (40) et assure l'étanchéité du boîtier extérieur (5) vers l'élément du couvercle (40), et **en ce qu'**un troisième élément d'étanchéité (20) est reçu dans une rainure de réception (36) du composant intermédiaire (33) ou du boîtier extérieur (5) et assure l'étanchéité du composant intermédiaire (33) vers le boîtier extérieur (5), ou **en ce qu'**un troisième élément d'étanchéité (20) est reçu dans une rainure de réception (32) d'un boîtier de moteur (23) du moteur d'entraînement (11) et assure l'étanchéité du boîtier de moteur (23) vers le boîtier extérieur (5).

10. Pompe à vis selon l'une des revendications précédentes, **caractérisée en ce que** le boîtier de vis (2), le boîtier extérieur (5), le composant intermédiaire (33) et/ou le composant de couvercle (40) sont en matière plastique.

11. Pompe à vis selon l'une des revendications précédentes, **caractérisée en ce qu'**il est prévu un moteur d'entraînement (11) qui est couplé à la vis d'entraînement (3) par un arbre d'entraînement (9) et qui est réalisé soit sous la forme d'un rotor sec, l'arbre d'entraînement (9) étant étanchéifié radialement par une bague d'étanchéité d'arbre, soit sous la forme d'un rotor humide, une partie du fluide sortant axialement du boîtier de vis (2) s'écoulant le long de l'arbre d'entraînement (9) dans le moteur d'entraînement (11).

12. Pompe à vis selon l'une des revendications précédentes, **caractérisée en ce qu'**il est prévu une vis d'entraînement centrale (3) et deux vis menées (4) agencées de part et d'autre de celle-ci.

13. Pompe à vis selon l'une des revendications précédentes, **caractérisée en ce que** le raccord d'entrée (6) est disposé en alignement avec un axe central de l'ensemble de vis comprenant la vis d'entraînement (3) et la ou les deux vis menées (4).

14. Utilisation d'une pompe à vis (1) selon l'une des revendications précédentes dans un véhicule automobile pour acheminer un fluide de service.

15. Utilisation selon la revendication 14, **caractérisée en ce que** la pompe à vis (1) est utilisée en tant que pompe à liquide de refroidissement, en particulier pour acheminer un liquide de refroidissement servant au refroidissement d'un accumulateur d'énergie.
